# FASCICULE DE BREVET EUROPEEN

(11) **EP 2 640 560 B1**
(45) Date de publication et mention de la délivrance du brevet: **12.04.2017**
(21) Numéro de dépôt: 11794824.0
(22) Date de dépôt: 17.11.2011
(51) Int. Cl.: B32B 37/02, B29B 15/12, B82Y 30/00, B29C 70/00, C08J 3/24, C08J 5/24, B29C 70/02, B29K 105/16, D06M 11/74, D06M 15/55

(54) **PROCEDE DE FABRICATION DE MATERIAU FIBREUX PRE-IMPREGNE DE POLYMERE THERMODURCISSABLE**
VERFAHREN ZUR HERSTELLUNG VON VORIMPRÄGNIERTEN FASERSTOFFEN MIT EINEM THERMISCH HÄRTBAREN POLYMER
METHOD FOR PRODUCING FIBROUS MATERIALS PRE-IMPREGNATED WITH A THERMOHARDENABLE POLYMER

(30) Priorité: 17.11.2010 FR 1059446
(43) Date de publication de la demande: 25.09.2013
(73) Titulaire: Arkema France, 92700 Colombes (FR)
(72) Inventeur: GAILLARD, Patrice, F-64370 Hagetaubin (FR); HAVEL, Mickael, Wayne Pennsylvania 19087 (US); KORZHENKO, Alexander, F-64000 Pau (FR)
(74) Mandataire: Killis, Andréas
(86) Numéro de dépôt international: PCT/FR2011/052670
(87) Numéro de publication internationale: WO 2012/066241

(56) Documents cités:
- WO-A1-2005/012170
- WO-A1-2008/065446
- DE-A1-102008 026 161
- FR-A1- 2 193 055

## Description

La présente invention concerne un procédé de fabrication d'un matériau fibreux pré-imprégné et les utilisations de tels matériaux fibreux.

On entend par matériaux fibreux un assemblage de fibres de renfort qui peuvent être, soit des fibres courtes comme les feutres ou les non tissés pouvant se présenter sous forme de bandes, nappes, tresses, mèches ou morceaux, soit des fibres continues comme par exemple dans les tissus 2D, fibres UD ou non tissées.

Les fibres pouvant entrer dans la composition du matériau sont plus spécialement des fibres de carbone, des fibres de verre, des fibres minérales telles que le basalte, le carbure de silicium, des fibres à base de polymères, des fibres végétales, des fibres cellulosiques telles que la viscose, le lin, le chanvre, la soie, le sisal, utilisées seules ou en mélange.

L'invention concerne plus particulièrement la fabrication de matériaux fibreux imprégnés par un polymère thermodurcissable ou autrement appelée résine thermodurcissable (les deux termes signifiant la même chose) ou un mélange de polymères (ou résines) thermodurcissables et les utilisations de tels matériaux dénommés matériaux fibreux pré-imprégnés pour la fabrication de matériaux composites servant à la réalisation de pièces à trois dimensions (3D).

En effet, les matériaux fibreux pré-imprégnés d'un polymère sont utilisés dans la fabrication de pièces de structure d'engins en particulier mobiles, en vue de les alléger tout en leur conférant une résistance mécanique comparable à celle obtenue avec des pièces de structure en métal et/ou d'assurer une protection thermique et/ou d'assurer l'évacuation de charges électrostatiques. Ces matériaux fibreux peuvent être imprégnés d'un polymère thermoplastique ou d'un polymère thermodurcissable.

Les matériaux fibreux pré-imprégnés peuvent en outre renfermer des nanocharges d'origine carbonique conductrices telles que des nanotubes de carbone (ou NTC), du noir de carbone, des nanofibres ou des graphènes, plus particulièrement des nanotubes de carbone (NTC).

La présence de nanotubes de carbone dans le matériau fibreux permet d'améliorer les propriétés mécaniques et/ou thermiques et/ou électriques des pièces mécaniques à base dudit matériau.

Ainsi, les matériaux fibreux pré-imprégnés constituent des matériaux légers assurant une résistance mécanique comparable au métal, procurant une augmentation de la résistance électrique et/ou thermique de la pièce mécanique réalisée afin d'assurer l'évacuation de la chaleur et/ou de la charge électrostatique. Ces matériaux sont particulièrement adaptés à la réalisation simple de toute structure mécanique en trois dimensions, couramment symbolisée 3D, notamment pour l'automobile, l'aéronautique, le domaine nautique, le transport ferroviaire, le sport ou l'aérospatial.

L'invention s'applique à la réalisation de pièces ayant une structure 3D comme notamment les ailes d'avion, le fuselage d'un avion, la coque d'un bateau, les longerons ou spoilers d'une automobile ou encore des disques de freins, le corps de vérin ou de volants de direction, au moyen de matériaux fibreux pré-imprégnés.

Dans la fabrication de matériau fibreux imprégné par une résine thermodurcissable (c'est-à-dire par un polymère thermodurcissable) ou un mélange de polymères thermodurcissables, l'imprégnation se fait à la température de fusion Tf de la résine comme température minimale ou à une température supérieure. Cette température Tf varie en fonction des résines utilisées. Après l'étape d'imprégnation du matériau, la résine est dans un état stable qui permet une mise en forme du matériau pour la fabrication de pièces à trois dimensions. La mise en forme peut être faite juste après imprégnation ou ultérieurement. Le durcisseur ou élément d'activation de la réaction de réticulation qui a été introduit dans la résine thermodurcissable reste inactif tant que sa température de réaction n'est pas atteinte. Cette température est supérieure à la température de transition vitreuse Tg de la résine (réticulée) et est supérieure à la température de fusion Tf (de la résine avant réticulation) si elle existe. Pour la réalisation de pièces ayant une structure à trois dimensions, les matériaux fibreux sont mis en forme et chauffés à une température au moins égale à la température de transition vitreuse Tg de la résine. La résine se transforme en résine thermodure et la pièce prend ainsi sa forme finale.

Jusqu'à présent, lorsque des nanocharges telles que les NTC sont introduites dans la résine thermodurcissable, elles sont en fait dispersées dans la formulation de base de la résine, c'est-à-dire dans la résine ou composition de résine thermodurcissable contenant le durcisseur.

Le Déposant a constaté dans ce cas, que la présence dans la résine de nanocharges, en particulier comme les NTC, pose plusieurs problèmes techniques à résoudre. D'abord, leur manipulation à sec sous forme de poudre pulvérulente de taille nanométrique présente des risques pour la santé, la sécurité et l'environnement en général pour les utilisateurs dans les ateliers de fabrication des matériaux fibreux pré-imprégnés. Ensuite, l'introduction de ces nanocharges, en particulier les NTC, conduit à la formation d'agrégats, nécessitant l'utilisation de mélangeurs particuliers à très haut cisaillement pour les désagréger avec risque d'échauffement et de réticulation précoce de la résine en présence du durcisseur. De même, ces nanocharges, du fait de leur taille (grande surface spécifique) et de leurs interactions avec la résine, entraînent une augmentation significative de la viscosité du milieu. Ceci limite de manière significative le taux de nanocharges, en particulier le taux des NTC, qu'il est possible d'incorporer dans une résine thermodurcissable contenant déjà le durcisseur, sans utiliser les méthodes particulières de dispersion à haut cisaillement avec les inconvénients cités.
A défaut de résolution des problèmes cités, la présence dans la résine des nanocharges, comme les NTC, provoque une formation de domaines sous-réticulés contribuant à la diminution de la température de transition vitreuse Tg de la résine par rapport à la température spécifiée par les fabricants et, par conséquent, une affectation avec diminution des performances thermomécaniques directement liées à la Tg, comme des performances électriques (conductivité) par l'hétérogénéité du matériau. Une des raisons ou explications possibles est que la partie de résine thermodurcissable reste adsorbée sur la surface des NTC et donc elle n'est plus disponible à la réaction de réticulation pour participer au réseau réticulé. La formation de domaines sous-réticulés contribuent alors à la diminution de la température de transition vitreuse et des performances thermomécaniques (Auad et al., Poly. Engin.Sci. 2010, 183-190). WO 2008/065446 décrit un procédé selon le préambule de la revendication 1.

La présente invention a pour but de remédier à ce problème. Elle permet d'éviter la formation de domaines sous-réticulés et de maintenir une température de transition vitreuse Tg de la résine thermodurcissable (polymère thermodurcissable ou mélange de polymères thermodurcissables) élevée.

A cette fin, il est proposé, selon l'invention, d'utiliser un mélange contenant les nanocharges, en particulier les nanotubes de carbone et le durcisseur, c'est-à-dire des nanocharges prédispersées séparément dans le durcisseur, afin d'introduire les nanotubes de carbone au moyen de ce mélange dans le matériau fibreux, plus précisément par l'imprégnation finale de ce matériau.

Ainsi, selon l'invention, les nanocharges sont introduites dans le polymère thermodurcissable, non pas seules, mais au moyen du mélange nanocharges / durcisseur. Conformément à l'invention, le mélange nanocharges / durcisseur peut être introduit directement dans le polymère thermodurcissable avant imprégnation du matériau fibreux ou bien être incorporé au matériau fibreux lors de l'imprégnation.

Le mélange nanocharges / durcisseur peut se présenter sous forme de fluide, de poudre, de fibres, de film, en fonction du durcisseur et du taux de nanocharges. Lorsque le mélange nanocharges / durcisseur est incorporé au matériau fibreux avant imprégnation, ce mélange sera de préférence réalisé, soit sous forme de fibres, soit sous forme de film, soit sous forme de poudre. Ainsi, lorsque le mélange de nanocharges / durcisseur est sous forme de fibres, ces fibres seront avantageusement dans l'assemblage de fibres formant le matériau fibreux. Lorsque le mélange se présente sous forme de poudre, il sera déposé sur le matériau fibreux. Lorsque le mélange est sous forme de film, il sera avantageusement déposé sur le matériau fibreux. Le matériau fibreux ainsi obtenu est ensuite imprégné par le polymère thermodurcissable. Il est par ailleurs apparu à la Demanderesse que cette invention pouvait également être appliquée à d'autres nanocharges conductrices carbonées que les nanotubes de carbone et en particulier au noir de carbone, aux nanofibres de carbone ou aux graphènes, qui sont également susceptibles de poser des problèmes de sécurité en raison de leur caractère pulvérulent et qui ont une aptitude à conférer des propriétés conductrices ou mécaniques améliorées aux matériaux dans lesquels ils sont incorporés.

La présente invention a plus particulièrement pour objet un procédé de fabrication d'un matériau fibreux comportant un assemblage d'une ou plusieurs fibres, composé de fibres de carbone ou de fibres de verre ou de fibres végétales ou de fibres minérales ou de fibres cellulosiques ou de fibres à base de polymère, utilisées seules ou en mélange, imprégné par un polymère thermodurcissable ou un mélange de polymères thermodurcissables contenant un durcisseur et des nanocharges d'origine carbonique telles que des nanotubes de carbone (NTC), du noir de carbone, des nanofibres de carbone ou des graphènes, principalement caractérisé en ce qu'on utilise, pour introduire lesdites nanocharges dans le matériau fibreux, un mélange contenant les nanocharges d'origine carbonique telles que les NTC et le durcisseur (nanocharges prédispersées dans ledit durcisseur). Le mélange nanocharges d'origine carbonique / durcisseur comporte avantageusement un taux de nanocharges compris entre 10% et 60%, de préférence entre 20% et 50% par rapport au poids total du mélange.

Le mélange nanocharges d'origine carbonique / durcisseur peut comporter en outre un accélérateur ou un catalyseur de réticulation. Différents types de réticulations et, en fonction de celles-ci, de durcisseurs correspondants peuvent être considérés selon la présente invention par exemple :
- par polycondensation ou par polyaddition entre deux fonctions coréactives avec le durcisseur étant celui de 2 composants qui est le moins visqueux et/ou de plus faible masse moléculaire, avec possibilité de réaction de réticulation accélérée par catalyse (présence d'un catalyseur) ou
- par réticulation radicalaire par ouverture d'insaturations éthyléniques, le durcisseur étant dans ce cas l'amorceur radicalaire, de type peroxyde y compris hydroperoxyde, avec présence éventuelle d'un accélérateur de décomposition du peroxyde, tel qu'une amine tertiaire, sels Co²⁺ ou Fe²⁺.

Dans un exemple préféré de réalisation, les nanocharges d'origine organique, ci-après dénommées nanocharges, sont constituées de nanotubes de carbone (NTC).

Par résine thermodurcissable, on considère la résine principale multifonctionnelle d'un système bicomposant (2K) réticulable par condensation, addition ou par ouverture d'insaturations éthyléniques par voie radicalaire ou par d'autres voies de réticulation ionique ou autre. L'autre composant réactif de ce système correspond à la définition de durcisseur selon l'invention qui correspond au composant le moins visqueux et/ou de plus faible masse moléculaire dans ledit système bicomposant. Dans le cas où la résine thermodurcissable comprend des insaturations éthyléniques réticulables, ledit durcisseur est par exemple un amorceur radicalaire, en particulier un amorceur peroxydique, terme qui signifie pour l'invention, soit un peroxyde, soit un hydroperoxyde. Avec un amorceur type hydroperoxyde, des accélérateurs de décomposition peuvent être utilisés, comme les amines tertiaires, les sels de cobalt (2+) ou de fer (2+).

Par durcisseur, on entend, au sens de la présente invention, un composé capable de provoquer une réticulation chimique et de conduire à un réseau de polymère tridimensionnel, par le biais de liaisons de réticulation irréversibles de type covalent, lesquelles une fois obtenues ne peuvent plus être transformées par l'action de la chaleur, avec ledit réseau tridimensionnel étant infusible par chauffage et insoluble dans un solvant. Ce composé est donc d'abord un agent réticulant ou de réticulation de ladite résine thermodurcissable. Ce composé est en général le composé le moins visqueux et/ou de plus faible masse moléculaire, en particulier parmi les deux composants d'un système réticulable bi-composant.

Le durcisseur est donc un composé souvent polyfonctionnel portant par exemple des fonctions amine, anhydride ou alcool ou isocyanate ou époxy réactives par rapport à des fonctions coréactives portées par une résine thermodurcissable. Par résine thermodurcissable, on entend, au sens de la présente invention, un polymère pouvant être réticulé chimiquement par un durcisseur, en une résine thermodure qui est de structure tridimensionnelle, infusible et insoluble, laquelle une fois obtenue ne peut plus être transformée par l'action de la chaleur. En d'autres termes, une résine thermodurcissable, une fois le réseau polymère tridimensionnel constitué, devient un réseau polymère thermodure qui ne coulera pas sous l'effet de la chaleur (absence de fluage), même avec un apport d'énergie mécanique cisaillante (par cisaillement).

Les résines thermodurcissables à réticuler à l'aide du durcisseur selon l'invention comprennent : les résines époxy, les polyesters et les polyesters insaturés, les esters vinyliques, les résines phénoliques, les polyuréthanes, les cyanoacrylates et les polyimides tels que les résines bis-maléimides, les aminoplastes (résultant de la réaction d'une amine telle que la mélamine avec un aldéhyde tel que le glyoxal ou le formaldéhyde) et leurs mélanges, sans que cette liste ne soit limitative. A noter que les polyesters insaturés, vinyl esters ou des résines multifionctionnelles acrylées réticulent par ouverture d'au moins deux insaturations éthyléniques en présence d'un amorceur radicalaire qui, dans ce cas, joue le rôle de durcisseur, en général en présence d'un comonomère éthylenique comme les monomères acryliques ou vinyl aromatiques. L'amorceur radicalaire préféré est de type peroxydique, ce terme incluant les peroxydes et hydroperoxydes. La décomposition de l'amorceur peroxydique et, en particulier de l'amorceur hydroperoxyde, peut être accélérée en présence d'un accélérateur de décomposition comme une amine tertiaire, un sel de cobalt (²⁺) ou de fer (²⁺).

L'imprégnation peut être réalisée en plaçant, selon une première option, le matériau fibreux dans un bain de polymère(s) thermodurcissable(s) fluide dans lequel on introduit ou on a introduit le mélange nanocharges / durcisseur (nanocharges prédispersées dans le durcisseur).

L'imprégnation peut être réalisée également en plaçant le matériau fibreux en lit fluidisé, le polymère thermodurcissable ou le mélange polymères thermodurcissables se trouvant à l'état de poudre, ainsi que le mélange nanocharges / durcisseur.

L'imprégnation peut aussi être réalisée en extrudant directement un flux de polymère thermodurcissable contenant le mélange nanocharges / durcisseur sur le matériau fibreux qui se présente sous forme de nappe ou de bande ou de tresse.

On peut également envisager la pré-imprégnation du matériau fibreux avec le mélange durcisseur / nanocharges avant le dépôt du polymère (résine) thermodurcissable.

Et, dans un autre exemple de réalisation, l'imprégnation consiste à :
i) utiliser au moins deux séries de fibres différentes, une première série de fibres continues formant les fibres de renfort dudit matériau, et une deuxième série de fibres constituées de polymère thermodurcissable (non réticulé) contenant le mélange nanocharges / durcisseur et ayant une température de fusion Tf ;
ii) disposer les deux séries de fibres au contact l'une de l'autre puis,
iii) chauffer l'ensemble des deux séries de fibres jusqu'à une température au moins égale à la température de fusion Tf des fibres thermodurcissables et en laissant refroidir l'ensemble jusqu'à la température ambiante, la température de fusion Tf étant inférieure à la température de réaction du durcisseur et inférieure à la température de fusion des fibres de la première série.

Les fibres de renfort constituant la première série peuvent être des fibres minérales ou des fibres organiques de polymère thermoplastique ou thermodurcissable ou bien encore un mélange de fibres minérales et de fibres organiques de polymère thermoplastique ou thermodurcissable. Un appareil est également décrit dans lequel l'imprégnation consiste à utiliser deux séries de fibres, l'imprégnation des fibres de renfort formant la première série se faisant directement par fusion à une température Tf des fibres de polymère thermodurcissable qui ont été mises en contact.

Avantageusement, l'appareil comprend une ligne de formation continue dudit matériau sous forme d'au moins une bande calibrée et homogène en fibres de renfort (minérales ou organiques) imprégnées de polymère thermodurcissable, comprenant le dispositif de mise en place d'au moins un ensemble de deux séries de fibres utilisées pour former une bande, de manière à disposer les deux séries de fibres au contact l'une de l'autre, ce dispositif étant muni d'un premier dispositif de calandrage et comprenant un dispositif de mise en forme, muni d'un deuxième dispositif de calandrage, muni de deux cylindres comportant au moins un segment de pressage de largeur désirée pour obtenir par pression une bande calibrée en largeur lors de son passage sur les cylindres.

Lorsque les deux séries de fibres sont chauffées à la température de fusion Tf de la fibre de polymère thermodurcissable, elles sont aussi mises en forme pour obtenir un matériau homogène de forme et de dimensions calibrées sous forme d'une bande.

Pour la formation simultanée de plusieurs bandes calibrées en largeur et homogènes de matériau fibreux pré-imprégné, l'appareil comporte des entrées pour plusieurs ensembles de deux séries de fibres et plusieurs segments de mise en forme et de calibrage en largeur des bandes.

L'invention concerne également les utilisations de matériaux fibreux pré-imprégnés par une composition contenant un polymère thermodurcissable ou un mélange de polymères thermodurcissables et un mélange de nanocharges comme les nanotubes de carbone et de durcisseur, pour la fabrication de pièces ayant une structure à trois dimensions.

Cette utilisation comprend une étape de mise en forme des matériaux fibreux pré-imprégnés, associée à un chauffage desdits matériaux à une température au moins égale à la température de transition vitreuse Tg du polymère thermodurcissable afin d'activer la réaction du durcisseur, c'est-à-dire de réticuler le polymère pour rendre la composition thermodure (c'est-à-dire réticulée) et donner à la pièce sa forme finale.

De façon pratique, plusieurs méthodes peuvent être utilisées pour la fabrication de pièces à trois dimensions (3D).

Dans un exemple, la mise en forme des matériaux fibreux peut consister à disposer les matériaux fibreux pré- imprégnés sur une préforme, en quinconce et de façon à ce qu'ils se superposent au moins en partie jusqu'à obtention de l'épaisseur voulue et à chauffer au moyen d'un laser qui permet en outre d'ajuster le positionnement des matériaux fibreux par rapport à la préforme, la préforme étant ensuite retirée.

Selon d'autres exemples, la mise en forme des matériaux pré-imprégnés est réalisée par l'une des techniques connues suivantes :
- le calandrage,
- le laminage,
- la pultrusion,
- l'injection basse pression (R.T.M) ou encore,
- la technique de l'enroulement filamentaire
- l'infusion
- thermocompression
- RIM ou S-RIM.

D'autres particularités et avantages de l'invention apparaîtront clairement à la lecture de la description qui est faite ci-après et qui est donnée à titre d'exemple illustratif et non limitatif et en regard des figures sur lesquelles :
- la figure 1 représente le schéma d'un appareil de mise en oeuvre du procédé dans le cas où l'imprégnation est réalisée par la fusion d'une série de fibres thermodurcissables, en contact avec une série de fibres de renfort,
- la figure 2 représente le schéma d'un demi-four avec la gorge de mise en place des fibres,
- la figure 3 représente le schéma des cylindres de calandrage avec les éléments complémentaires de calibrage et mise en forme du matériau en forme de bande,
- la figure 4 représente le schéma d'un demi-four avec plusieurs gorges de mise en place des fibres,
- la figure 5 représente le schéma des cylindres de calandrage avec plusieurs éléments complémentaires de calibrage et mise en forme du matériau en plusieurs bandes.
Dans la suite de cette description, on désigne par « nanocharge d'origine carbonique », destinée à être mélangée avec le durcisseur selon l'invention, une charge comprenant au moins un élément du groupe formé des nanotubes de carbone, de nanofibres de carbone, du noir de carbone, des graphènes, de graphite ou un mélange de ceux-ci en toutes proportions. De préférence, la taille des particules de ces nanocharges ne dépasse pas 150 nm, ces particules pouvant se présenter sous forme d'agrégats de particules ne dépassant pas 10 µm (microns). Les nanocharges d'origine carbonique sont ci-après dénommées nanocharges.

Selon l'invention, il est proposé d'introduire des nanocharges telles que des nanotubes de carbone (NTC), au moyen d'un mélange contenant un composé réactif permettant de réaliser la réticulation de la résine thermodurcissable et les nanocharges lorsque celle-ci (résine) est chauffée à une température au moins égale à la température de réticulation. De manière connue, le composé réactif comporte au moins un durcisseur ou une composition de durcisseurs. Il peut comporter également un accélérateur ou un catalyseur. On parlera par la suite, pour simplifier, de durcisseur.

### I) Le mélange nanocharges / durcisseur :

Le mélange contient des nanocharges et le durcisseur ou une combinaison de durcisseurs, choisi(s) en fonction de la résine utilisée de manière connue pour un homme de métier. Ainsi, le mélange nanocharges / durcisseur peut comporter des additifs, par exemple des composés qui seront inertes vis-à-vis de la réaction de réticulation (comme des solvants) ou au contraire des solvants ou diluants réactifs qui contrôleront la réaction de réticulation en ajustant certaines propriétés mécaniques de la résine thermodure finale, ainsi que des catalyseurs ou des accélérateurs permettant d'accélérer la réticulation des composants réactifs.

Comme additifs au mélange nanocharges / durcisseur, on peut avoir un polymère thermoplastique ou un mélange de polymère thermoplastique, comme par exemple un polyamide (PA), un polyétherimide (PEI) ou un époxy solide.

Lorsqu'un accélérateur ou un catalyseur sont présents dans le mélange, ils sont choisis également de manière connue pour un homme de métier en fonction de la résine utilisée.

Le mélange nanocharges d'origine carbonique / durcisseur comporte avantageusement un taux de nanocharges compris entre 10% et 60%, de préférence entre 20% et 50% par rapport au poids total du mélange.

Les nanotubes de carbone (NTC) possèdent des structures cristallines particulières, de forme tubulaire, creuses et closes, composées d'atomes disposés régulièrement en pentagones, hexagones et/ou heptagones, obtenues à partir de carbone. Les NTC sont en général constitués d'un ou plusieurs feuillets de graphite enroulés. On distingue ainsi les nanotubes mono-parois (Single Wall Nanotubes ou SWNT) et les nanotubes multi-parois (Multi Wall Nanotubes ou MWNT). Les nanotubes à double paroi peuvent notamment être préparés comme décrit par FLAHAUT et al dans Chem. Com. (2003), 1442. Les nanotubes à parois multiples peuvent de leur côté être préparés comme décrit dans le document WO 03/02456. On préfère, selon l'invention, utiliser des NTC à parois multiples.

Les nanotubes de carbone mis en oeuvre selon l'invention ont habituellement un diamètre moyen allant de 0,1 à 200 nm, de préférence de 0,1 à 100 nm, plus préférentiellement de 0,4 à 50 nm et, mieux de 1 à 30 nm et avantageusement une longueur de plus de 0,1 µm et avantageusement de 0,1 à 20 µm, par exemple d'environ 6 µm. Leur rapport longueur / diamètre est avantageusement supérieur à 10 et le plus souvent supérieur à 100. Ces nanotubes comprennent donc notamment les nanotubes dits "VGCF" (fibres de carbone obtenues par dépôt chimique en phase vapeur ou Vapor Grown Carbon Fibers). Leur surface spécifique est par exemple comprise entre 100 et 300 m²/g et leur densité apparente peut notamment être comprise entre 0,01 et 0,5 g/cm³ et plus préférentiellement entre 0,07 et 0,2 g/cm³. Les nanotubes de carbone multi-parois peuvent par exemple comprendre de 5 à 15 feuillets et plus préférentiellement de 7 à 10 feuillets.

Un exemple de nanotubes de carbone bruts est la dénomination commerciale Graphistrength® C100 de la société ARKEMA.

Les nanofibres de carbone, comme les nanotubes de carbone, sont des nanofilaments produits par dépôt chimique en phase vapeur (ou CVD) à partir d'une source carbonée qui est décomposée sur un catalyseur comportant un métal de transition (Fe, Ni, Co, Cu), en présence d'hydrogène, à des températures de 500 à 1200°C. Toutefois, ces deux charges carbonées se différencient par leur structure (I. MARTIN-GULLON et al., Carbon 44 (2006) 1572-1580). En effet, les nanotubes de carbone sont constitués d'un ou plusieurs feuillets de graphène enroulés de manière concentrique autour de l'axe de la fibre pour former un cylindre ayant un diamètre de 10 à 100 nm. Au contraire, les nanofibres de carbone se composent de zones graphitiques plus ou moins organisées (ou empilements turbostratiques) dont les plans sont inclinés à des angles variables par rapport à l'axe de la fibre. Ces empilements peuvent prendre la forme de plaquettes, d'arêtes de poisson ou de coupelles empilées pour former des structures ayant un diamètre allant généralement de 100 nm à 500 nm, voire plus.

Par ailleurs, le noir de carbone est un matériau carboné colloïdal fabriqué industriellement par combustion incomplète de produits pétroliers lourds qui se présente sous forme de sphères de carbone et d'agrégats de ces sphères et dont les dimensions sont généralement comprises entre 10 et 1000 nm.

Les graphènes sont des feuillets de graphite isolés et individualisés, mais très souvent on appelle graphènes des assemblages comprenant entre un et quelques dizaines de feuillets. A la différence des nanotubes de carbone, ils présentent une structure plus ou moins plane avec des ondulations dues à l'agitation thermique d'autant plus fortes que le nombre de feuillets se réduit. On distingue les FLG (Few Layer Graphene), les NGP (Nanosized Graphene Plates), les CNS (Carbon NanoSheets), les GNR (Graphene NanoRibbons).

Le graphite est caractérisé par une structure cristalline composée d'atomes de carbone organisés en plans d'hexagones réguliers. Le graphite est disponible par exemple sous les marques Timrex ou Ensaco.

Le durcisseur est choisi en fonction de la nature de la résine thermodurcissable et de son mode de réticulation (ou de sa réactivité) dans un système réactif (en fait coréactif) bicomposant, par exemple par (poly)condensation ou par (poly)addition ou par réticulation via l'ouverture d'insaturations éthyléniques par voie radicalaire ou (réticulable) par d'autres voies. Si la résine thermodurcissable porte des fonctions réactives par condensation ou par addition, ledit durcisseur porte des fonctions coréactives, c'est-à-dire capables de réagir avec les fonctions portées par ladite résine thermodurcissable, respectivement par condensation et addition. La résine thermodurcissable et le durcisseur forment ainsi un système réactif bicomposant ayant une fonctionnalité réactive moyenne supérieure à 2 pour être réticulable. Dans le cas des résines thermodurcissables, réticulables via l'ouverture d'insaturations éthyléniques par voie de réticulation radicalaire ou autre voie, au moins deux insaturations éthyléniques par chaîne polymère sont présentes. Dans ce cas, les durcisseurs peuvent être par exemple des amorceurs radicalaires, comme la famille des composés peroxydiques qui peuvent être des peroxydes ou hydroperoxydes. Ces derniers peuvent se décomposer en radicaux libres, soit par l'élévation de la température (par effet thermique), mais également à basse température par l'emploi d'un réducteur qui est un accélérateur de décomposition radicalaire de l'amorceur et couramment connu comme accélérateur dans ce type de compositions thermodurcissables (réticulables).

Donc, en fonction des résines thermodurcissables et des fonctions réactives portées, les durcisseurs utilisables selon l'invention peuvent comprendre des amines, des dérivés obtenus par réaction de l'urée avec une polyamine, des anhydrides d'acide, des acides organiques, des polyols et leurs mélanges sans que cette liste ne soit limitative.

Comme amines utilisables, on peut citer les amines aliphatiques telles que la cyclohexylamine, les éthylène polyamines linéaires telles que l'éthylènediamine, la diéthylènetriamine (DETA), la triéthylènetétramine (TETA), la tétraéthylène pentamine (TEPA), les amines cycloaliphatiques telles que le 1,2-diaminocyclohexane, l'isophorone diamine, la N,N'-diisopropyle isophorone diamine, l'hexamine, les amines aromatiques telles que la benzylamine, la diéthyltoluènediamine (DETDA), la métaphénylènediamine (MPDA), la diaminodiphényl méthane (DDM), la diaminodiphényl sulfone (DDS), le dicyanodiamide (DICY tel que Dyhard 100SF de AlzChem), 4,4'-diaminodiphényl sulfone, la 4,4'-méthylène dianiline, la méthylène bis 4,4'-orthochloroaniline (MBOCA), les oligomères de polyamines (par exemple Epikure 3164 de Résolution).

Comme dérivés obtenus par réaction de l'urée avec une polyamine, on peut citer la 1-(2-aminoéthyl)imidazolidone, aussi connue comme 1-(2-aminoéthyl)imidazolidine-2-one (UDETA), la 1-(2-hydroxyéthyl)imidazolidone (HEIO), 1-(2-[(2-aminoéthyl)amino]éthyl)imidazolidone (UTETA), la 1-(2-{2-[(2-aminoéthylamino]éthyl}amino) éthyl]imidazolidone (UTEPA), la N-(6-aminohexyl)-N'-(6-méthyl-4-oxo-1,4-dihydropyrimidin-2-yl)urée (UPy).

Comme anhydrides, on peut citer les anhydrides phtaliques et dérivés tels que l'anhydride phtalique, l'anhydride dichlorophtalique, l'anhydride tétrachlorophtalique, l'anhydride tétrahydrophtalique, l'anhydride méthyl hexahydrophtalique (MHHPA), l'anhydride méthyl tetra-hydrophtalique (MTHPA, tel que Aradur 917 de Huntsman), l'anhydride méthyl hexahydrophtalique (HHPA), l'anhydride méthyl nadic (AMN), l'anhydride dodécényl succinique (DDSA), l'anhydride maléique.

Comme acides organiques, on peut citer les acides organiques tels qu'acide oxalique, succinique, citrique, tartrique, adipique, sébacique, perchlorique, phosphorique, les acides disulfoniques tels que l'acide m-benzènedisulfonique, l'acide p-toluènesulfonique, le chlorure de méthanedisulfonyle ou l'acide méthanedisulfonique.

Comme phosphates organiques, on peut citer les monométhyl-orthophosphate, monoéthyl-orthophosphate, mono-n-butyl-orthophosphate, monoamyl-orthophosphate.

Comme polyols utilisables comme durcisseurs notamment avec des résines isocyanates, on peut citer le glycérol, l'éthylène glycol, le triméthylolpropane, le pentaérythritol, les polyétherpolyols, par exemple ceux obtenus par condensation d'un oxyde d'alkylène ou d'un mélange d'oxydes d'alkylène avec le glycérol, l'éthylène glycol, le triméthylolpropane, le pentaérythritol, les polyesterspolyols, par exemple ceux obtenus d'acides polycarboxyliques, notamment l'acide oxalique, l'acide malonique, l'acide succinique, l'acide adipique, l'acide maléïque, l'acide fumarique, l'acide isophtalique, l'acide téréphtalique, avec le glycérol, l'éthylène glycol, le triméthylolpropane, le pentaérythritol.

Les polyétherpolyols obtenus par addition d'oxydes d'alkylènes, en particulier l'oxyde d'éthylène et/ou l'oxyde de propylène, sur les amines aromatiques, en particulier le mélange de 2,4 et 2,6 de toluène diamine conviennent également.

Comme autres composés pouvant être utilisés comme durcisseurs selon l'invention, on peut citer également les isocyanates tels que le bis-4-phényldiisocyanate, les dérivés phénoliques tels que le produit DEH 85 de Dow, les adduits d'oxyde d'éthylène ou oxyde de propylène avec une polyamine telle que la DETA, par exemple l'hydroxyéthyldiéthylène triamine, les polyétheramines commercialisées par Hunstman sous la dénomination commerciale Jeffamine® D-2000, T-403, les adduits DGEBA-amines aliphatiques en excès de fonctions amine relativement aux glycidyles, les polyamidoamines par exemple Versamid® 140 de la société Cognis Corp., Epikure® 3090 de la société Hexion, les polyamides comme Epi-cure® 3090, et Epikure® 3100-ET-60 de la société Hexion, les amidoamines obtenus par condensation entre un acide gras et une polyamine comme Ancamide®-260A®, et Ancamide® 501 d'Air Products, les polyamides « flexiblisés » comme Epi-cure® 3164 de la société Hexion, les polymercaptans tels que Capcure® 3830-81, de la société Cognis Corp., les bases de Mannich obtenus par réaction entre (poly)amine, formaldéhyde et (alkyl)phénols comme Epi-cure® 190, 195, 197 de la société Hexion, les cétimines par exemple Epikure® 3502 de la société Hexion, les résines époxy polyols de base pouvant réticuler les polyisocyanates par exemple Epikote® 1007 et 1009 de la société Hexion.

Comme autre composé pouvant être utilisé comme durcisseur, en particulier pour les résines thermodurcissables à insaturations éthyléniques, on peut citer également les peroxydes/hydroperoxydes organiques avec leurs matrices (souvent des solvants organiques car les peroxydes ne sont jamais conditionnés purs) tels que mentionnés ci-après. On peut choisir par exemple l'hydroperoxyde de cumène (Luperox® CU50VE d'Arkema contenant 50% de solvants organiques).

### Catalyseur et Accélérateur

Le catalyseur est choisi parmi : les acides benzoïques substitués tels que les acides salicylique, 5-chlore-benzoique ou acétylsalicylique. Les acides sulfonés (ou sulfoniques) tels que l'acide m-benzène-disulfonique.
L'accélérateur (en particulier l'accélérateur de décomposition d'un hydroperoxyde) peut être choisi parmi : les amines tertiaires telles que diméthylaminoéthyl phénol (DMP), benzyl diméthyl aniline (BDMA), monoéthyl amine associée au trifluorure de bore (MEA-BF3), les imidazoles tels que imidazole-2-éthyl-4-méthyl, les alcoolats métalliques.

### Il) Les polymères thermodurcissables dénommés également résines thermodurcissables

Par polymères thermodurcissables ou encore «résine thermodurcissable», on entend un matériau généralement liquide à température ambiante ou à bas point de fusion qui est susceptible d'être durci, généralement en présence d'un durcisseur, sous l'effet de la chaleur, d'un accélérateur, d'un catalyseur ou d'une combinaison des ces éléments, pour obtenir une résine thermodurcie. Celle-ci (résine thermodurcie) est constituée d'un matériau renfermant des chaînes polymères de longueur variable liées entre elles par des liaisons covalentes, de manière à former un réseau tridimensionnel. Sur le plan de ses propriétés, cette résine thermodurcie est infusible et insoluble. Elle peut être ramollie en la chauffant au-dessus de sa température de transition vitreuse (Tg) mais ne présente pas de fluage et une fois qu'une forme lui a été conférée, elle ne peut être remise en forme ultérieurement par chauffage.

### Les polymères thermodurcissables sont choisis parmi :

- les polyesters insaturés, les résines époxy, les esters vinyliques, les résines phénoliques, les polyuréthanes, les cyanoacrylates, les résines multifonctionnelles acrylées et les polyimides, tels que les résines bis-maléimide, les aminoplastes (résultant de la réaction d'une amine telle que la mélamine avec un aldéhyde tel que le glyoxal ou le formaldéhyde) et leurs mélanges.

Parmi les résines thermodurcissables, on préfère celles comprenant des motifs époxy, acide ou isocyanate, tels que ceux qui conduisent à l'obtention de réseaux thermodurs de type époxy, polyester ou polyuréthane, par réaction avec un durcisseur porteur respectivement de fonction amine, acide ou alcool. Encore plus particulièrement, l'invention s'applique aux résines thermodurcissables époxy (ou époxydées) réticulables en présence d'un durcisseur de type amine (y compris polyamines, polyamides-amines, polyéther-amines) ou de type anhydride.

S'agissant des résines époxy à réticuler à l'aide du durcisseur selon l'invention, à titre d'exemple, on peut citer des résines époxydées présentant une fonctionnalité définie comme le nombre de fonctions époxydes (ou oxiranes) par molécule, au moins égale à 2, telles que l'éther diglycidylique du bisphénol A, le diépoxyde de butadiène, le 3,4-époxycyclohexane-carboxylate de 3,4-époxycyclohexylméthyle, le dioxyde de vinylcyclohexène, le 4,4' -di (1,2-époxyéthyl) diphényléther, le 4,4' (1, 2-époxyéthyl) -biphényle, le 2,2-bis (3,4-époxycyclohexyl) - propane, l'éther diglycidylique du résorcinol, l'éther diglycidylique du phloroglucinol, le bis(2,3-époxycyclo pentyl) éther, le 2-(3,4-époxy) cyclohexane-5, 5-spiro(3,4-époxy)cyclohexane-m-dioxane, l'adipate de bis-(3,4-époxy-6méthyl-cyclohexyle), le N,N-m-(phénylènebis-4,5-époxy-1,2-cyclohexane-dicarboxamide), un composé diépoxy contenant un cycle hydantoïne. De telles résines peuvent généralement être représentées par la formule : 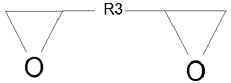 dans laquelle R3 est un groupement de formule -CH2-O-R4-O-CH2- dans laquelle R4 est un groupement divalent choisi parmi les groupements alkylène ayant de 2 à 12 atomes de carbone et ceux comprenant au moins un cycle aliphatique ou aromatique substitué ou non.

On peut aussi utiliser des résines polyépoxydées comportant trois ou plus groupes époxydes par molécule, comme par exemple, l'éther triglycidique du p-aminophénol, les éthers polyarylglycidiques, le 1,3,5-tri(1,2-époxy)benzène, la 2,2',4,4'-tétraglycidoxybenzophénone, le tétraglycidoxytétraphényléthane, l'éther polyglycidylique de la résine phénolformaldéhyde de type novolaque (novolaques polyépoxydées), le polybutadiène époxydé, l'éther triglycidylique du glycérol, l'éther triglycidylique du triméthylolpropane et le tétraglycidyl 4,4'-diaminodiphénylméthane.

Les résines époxy nécessitent généralement comme agent durcisseur un anhydride d'acide ou une amine.

Les résines polyesters saturés et polyesters insaturés sont obtenues par réaction d'un polyacide (ou anhydride correspondant) avec un polyol. Ledit polyacide est saturé pour les polyesters saturés et éthyléniquement insaturé pour les polyesters insaturés. On peut citer comme polyacide : l'acide succinique, l'acide pentanedioïque, l'acide adipique, l'acide maléique (insaturé), l'acide fumarique (insaturé), l'acide itaconique (insaturé) ainsi que les anhydrides de ces acides, l'acide heptanedioïque, l'acide octanedioïque, l'acide azélaïque, l'acide sébacique, l'acide undécanedioïque, l'acide dodécanedioïque, l'acide brassylique, l'acide tetradécanedioïque, l'acide hexadécanedioïque, l'acide octadécanedioïque, l'acide octadécènedioïque, l'acide eicosanedioïque, l'acide docosanedioïque et les dimères d'acides gras contenant 36 atomes de carbone (en C₃₆) ou de trimères d'acides gras en C₅₄.

Les dimères ou trimères d'acides gras mentionnés ci-dessus sont des acides gras oligomères (dimérisés / trimérisés) obtenus par oligomérisation ou polymérisation d'acides gras monobasiques insaturés à longue chaîne hydrocarbonée en C₁₈ (tels que l'acide linoléïque et l'acide oléïque), comme décrit notamment dans le document EP 0 471 566.

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(methylcyclohexyl)propane.

Lorsque le diacide est aromatique, il est choisi parmi l'acide phtalique, téréphtalique, isophtalique, tétrahydrophtalique, trimellitique et les diacides naphtaléniques (ou naphténiques), ainsi que les anhydrides correspondants de ces acides.

Parmi les polyols, composés dont la molécule comporte au moins deux groupes hydroxyles permettant de réagir sur les polyacides pour l'obtention de polyesters, on peut citer les éthylèneglycol, propylèneglycol, butylèneglycol, le 1,6-hexaméthylène glycol, diéthylèneglycol, dipropylèneglycol, néopentylglycol, triéthylèneglycol, glycérol, triméthyloléthane, triméthylolpropane, pentaérythritol, le 1,3 triméthylène glycol, le 1,4-tetraméthylèneglycol, le 1,8 octaméthylèneglycol, le 1,10-décaméthylène glycol, le 1,4-cyclohexane diméthanol, polyetherdiols tels que le PEG, le PPG ou le PTMG, des motifs diacide carboxylique tels que l'acide térephtalique et des motifs glycol (éthane diol) ou butane diol.

On préfère les polyesters insaturés résultant de la polymérisation par condensation d'acides dicarboxyliques renfermant un composé éthyléniquement insaturé (tel que l'anhydride maléique ou l'acide fumarique) et de glycols tels que le propylène glycol. Ils sont généralement durcis en dilution dans un monomère réactif tel que le styrène, par réaction de ce dernier avec les insaturations présentes sur la chaîne polyester, généralement à l'aide d'un durcisseur choisi parmi les peroxydes organiques y compris hydroperoxydes, soit par effet thermique (chauffage), soit en présence d'un accélérateur de décomposition de type amine tertiaire ou sel de cobalt (2+), comme l'octoate de cobalt ou un sel de fer (2+).

Les esters vinyliques comprennent les produits de la réaction d'époxydes avec l'acide (méth)acrylique. Ils peuvent être durcis après dissolution dans le styrène (de façon similaire aux résines polyesters) à l'aide de peroxydes organiques comme les polyesters insaturés.

S'agissant des résines isocyanates à réticuler selon l'invention, on peut citer l'hexaméthylènediisiocyanate (HMDI), les triméthylhexaméthylènediisocyanates (TMDIs) tels le 2,2,4-triméthylhexaméthylènediisiocyanate et le 2,4,4-triméthylhexaméthylènediisocyanate, les undécanes triisocyanates (UNTIs), le 2-méthylpentane diisocyanate, l'isophorone diisocyanate, le norbornane diisocyanate (NBDI), le 1,3-bis (isocyanatométhyl)cyclohexane (XDI hydrogéné), le 4,4'-bis(isocyanatocyclohexyl)méthane (H12MDI), le 2,4- ou 2,6-toluène diisocyanate (TDI), les diphénylméthane diisocyanates (MDIs), le 1,5-naphtalène diisocynanate (NDI), le p-phénylène diisocyanate (PPDI), les adduits comprenant au moins deux fonctions isocyanates et formés par condensation entre composés comportant au moins deux fonctions isocyanates parmi ceux cités et des composés porteurs d'autres fonctions réactives avec les fonctions isocyanates, comme par exemple des fonctions hydroxyle, thiol ou amine. Plus particulièrement, comme résines thermodurcissables portant des fonctions isocyanates, on peut citer des prépolymères à terminaisons isocyanates issus de la réaction d'un diisocyanate en excès et d'un diol ou d'un oligomère (polyéther, polyester) diol ou issus d'un diisocyanate en excès et d'une diamine ou d'un oligomère diamine (polyéther-amine, polyamide-amine).

Parmi les polyisocyanates peuvent être cités les polyisocyanates modifiés tels que ceux contenant des groupements carbodiimides, des groupements uréthanes, des groupements isocyanurates, des groupements urée ou des groupements biurée.
Des polyols permettant de réagir avec les polyisocyanates sont utilisés comme durcisseurs pour l'obtention de polyuréthanes et des polyamines pour obtenir de polyurées.

### III) Les fibres des matériaux fibreux

Les fibres constituant les matériaux fibreux peuvent être des fibres minérales ou organiques, comme par exemple des fibres de carbone, des fibres de verre, des fibres minérales telles que le basalte, le carbure de silicium, des fibres à base de polymères, par exemple tels que les polyamides aromatiques ou aramides ou les polyoléfines, des fibres cellulosiques telles que la viscose, des fibres végétales telles que le lin, le chanvre, la soie, le sisal, utilisées seules ou en mélange.

### Exemples de procédés d'imprégnation du matériau fibreux

L'imprégnation peut être réalisée en plaçant le matériau fibreux dans un bain de polymère(s) thermodurcissable(s) fluide, dans lequel on introduit le mélange nanocharges / durcisseur. Par « fluide », on entend, au sens de la présente invention, un milieu qui s'écoule sous son propre poids et qui n'a pas de forme propre (à l'inverse d'un solide), comme un liquide qui peut être plus ou moins visqueux ou une poudre mise en suspension dans un gaz (air par exemple) généralement connu sous le vocable de « lit fluidisé ».

Lorsque les matériaux fibreux sont sous forme de bande ou de nappe, ils peuvent être mis en circulation dans le bain de polymère thermodurcissable fluide, par exemple liquide.

L'imprégnation peut être réalisée suivant un procédé d'imprégnation en lit fluidisé dans lequel la composition polymérique, à savoir le polymère ou le mélange de polymères contenant le mélange nanocharges / durcisseur, se trouve à l'état de poudre. Pour cela, on passe les matériaux fibreux dans des bains d'imprégnation en lit fluidisé de particules de polymère contenant le mélange nanocharges / durcisseur et ces imprégnations sont éventuellement séchées et peuvent être chauffées afin d'effectuer l'imprégnation du polymère sur les fibres ou tissus, calandrées si nécessaire.

Il est aussi possible de déposer le polymère contenant le mélange nanocharges / durcisseur et se présentant sous forme de poudre, directement sur les matériaux fibreux placés à plat sur un support vibrant, afin de permettre la répartition de la poudre sur les matériaux fibreux.

En variante encore, il est possible d'extruder directement un flux de polymère contenant le mélange nanocharges / durcisseur sur le matériau fibreux se présentant sous forme de nappe ou bande ou tresse et d'opérer un calandrage.

Lorsque le mélange nanocharges / durcisseur est introduit directement dans le matériau fibreux, l'imprégnation peut être réalisée en plaçant le matériau fibreux en lit fluidisé, avec le polymère thermodurcissable ou le mélange polymères thermodurcissables se trouvant à l'état de poudre. L'imprégnation peut être réalisée en plaçant le matériau fibreux dans un bain de polymère(s) thermodurcissable(s) fluide ou encore par dépôt d'un film de polymère thermodurcissable sur le matériau fibreux, calandrage et chauffage.

Dans le cas où le mélange nanocharges / durcisseur est introduit directement sous forme de poudre après broyage dans le matériau fibreux, l'ensemble peut reposer sur un plateau vibreur, par exemple, pour bien répartir la poudre. L'étape d'imprégnation est réalisée avantageusement par dépôt d'un film de polymère thermodurcissable sur le matériau fibreux, calandrage et chauffage.

Selon un autre exemple, le matériau fibreux est formé d'une première série de fibres constituant les fibres de renfort minérales ou organiques et d'une deuxième série de fibres en polymère thermodurcissable contenant le mélange nanocharges / durcisseur, ayant une température de fusion Tf (avant réticulation) inférieure à la température de fusion des fibres de la première série et inférieure à la température de transition vitreuse Tg du polymère thermodurcissable (réticulé). Les deux séries de fibres sont mises en contact et l'imprégnation est réalisée en chauffant jusqu'à la température de fusion Tf de la deuxième série de fibres (fibres en polymère thermodurci).

Les polymères (ou résines) thermodurcissables entrant dans la constitution des fibres thermodurcissables selon cet exemple de réalisation sont choisis parmi : les polyesters insaturés, les résines époxy, les esters vinyliques, les acrylates monomères ou oligomères multifonctionnels (MFA), les résines acryliques acrylées (multifonctionnelles), les résines phénoliques, les polyuréthanes, les cyanoacrylates et les polyimides, tels que les résines bis-maléimides, les aminoplastes (résultant de la réaction d'une amine telle que la mélamine avec un aldéhyde tel que le glyoxal ou le formaldéhyde) et leurs mélanges.

### Exemple d'appareil de fabrication d'un matériau fibreux dans le cas où l'imprégnation est réalisée par fusion de fibres de polymère thermodurcissable ou de mélange de polymères thermodurcissables

Dans cet exemple de réalisation de matériau pré-imprégné, lorsque les deux séries de fibres sont chauffées à la température de fusion Tf des fibres de la deuxième série, elles sont également mises en forme pour obtenir un matériau homogène de forme et de dimensions calibrées avec l'appareil tel que décrit ci-après.

La mise en place des deux séries de fibres et la mise en forme du matériau imprégné de fibres thermodurcissables fondues (fibres de la deuxième série) sont réalisées avantageusement par un système comprenant la mise en oeuvre d'opérations de calandrage.

On réalise de préférence plusieurs opérations de calandrage successives pour affiner la mise en forme du matériau et obtenir un matériau homogène sans défaut, c'est-à-dire sans granulosité et sans bulle d'air.

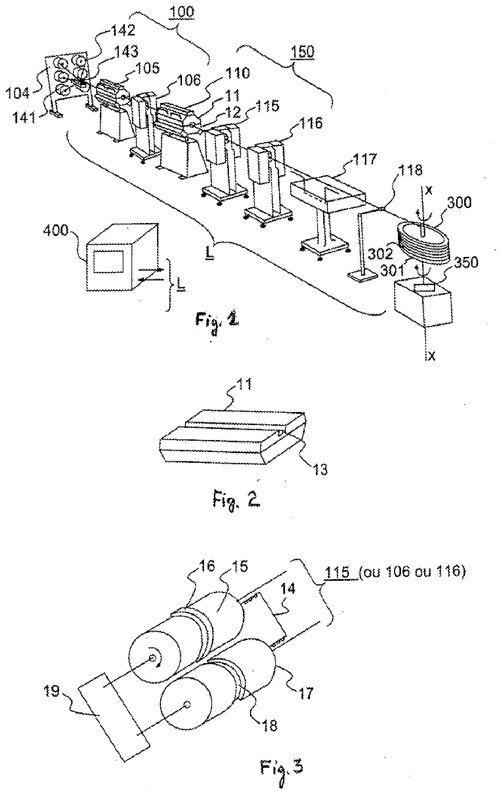

De préférence, l'appareil illustré par le schéma de la figure 1 comprend une ligne de formation continue dudit matériau sous forme d'une bande calibrée et homogène en fibres de renfort par exemple minérales, imprégnées de polymère thermodurcissable selon l'invention. La ligne de formation continue comporte un dispositif de mise en place des deux séries de fibres muni d'un premier dispositif de calandrage.

Selon un mode de réalisation, l'appareil comprend une ligne L de formation continue du matériau sous forme d'une bande calibrée et homogène, décrite ci-après en relation avec les figures 1, 2 et 3.

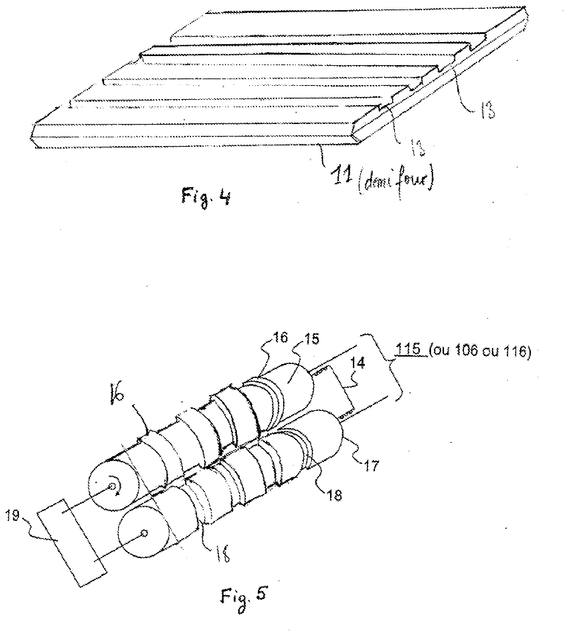

Dans une variante de réalisation la ligne L de formation continue du matériau est prévue pour former simultanément plusieurs bandes calibrées et homogènes, comme cela va être décrit en relation avec les figures 4 et 5.

Cette ligne L de formation continue comporte :
- un dispositif de mise en place des fibres 100 équipé :
   - d'un dispositif de déroulement des fibres, 104, ce dispositif 104 comporte des bobines de fibres 141 pour les fibres de la première série et des bobines 142 pour les fibres de la deuxième série. En pratique, il y a autant de bobines que de fibres et un dévidoir 143.

   - un dispositif de préchauffage 105 ; il comporte deux demi-fours à ouverture horizontale, des rampes à infrarouge. Sa longueur est de 1 m. La température maximale pouvant être atteinte est de 600°C. La gorge de passage 13 a une section de 40 x 40 mm environ.
   - un dispositif de calandrage 106 ; il comporte deux cylindres comme illustré sur la figure 3, de diamètre 100 mm, largeur 100 mm, une surface chromée polie avec Ra inférieure à 0,1 micron. La surface des cylindres 15 et 17 possède des éléments 16 et 18, mâle et femelle. La forme de ces éléments est appropriée à l'emboîtement de l'un dans l'autre, par pression, de façon à calibrer la bande 10 en largeur, lors de son passage sur les cylindres. De préférence, la largeur de la bande est de 3 mm à quelques dizaines de mm et par exemple de 6 mm. Ce dispositif comporte un chauffage électrique fournissant une température maximale à environ 260°C, une cartouche chauffante avec collecteur tournant d'alimentation et régulation par une sonde thermocouple en surface, un palier auto-aligneur et écartement réglable de 0 à 2 mm par vis-écrou, un entraînement synchrone des deux cylindres par chaîne ou courroie crantée, un motoréducteur avec servomoteur sans balais « brushless » permettant d'avoir une vitesse de ligne maximale de 30 m/minute et une synchronisation électrique avec le train de tirage.
- un dispositif de mise en forme 150 équipé :
   - d'un dispositif de chauffage 110 identique au dispositif de préchauffage 105. La température de ce dispositif est réglée pour atteindre la température de fusion Tf des fibres polymères thermoplastiques. Le demi-four 11 comporte une gorge de passage 13 représentée sur la figure 7,
   - d'un deuxième dispositif de calandrage 115 ;
   - d'un troisième dispositif de calandrage 116 ;
   - ces dispositifs de calandrage sont identiques au premier dispositif de calandrage 106. Les détails de la structure des cylindres sont illustrés sur le schéma de la figure 3.
   - un dispositif de refroidissement 117 : il se présente sous la forme d'un bac de longueur 1 m en acier inoxydable dans lequel la bande est introduite et plongée dans de l'eau froide si nécessaire (la bande est représentée en pointillés dans la traversée du bac). Il comprend un sécheur à air comprimé et un groupe de réfrigération d'eau de 3 KW environ.
   - un dispositif 118 de régulation du bobinage et de maintien de la bande empêchant les vibrations et opérant des mouvements de haut en bas sur une hauteur correspondant à la largeur des bobines d'enroulement 300.
   - un dispositif d'enroulement 300 : ce dispositif comporte plusieurs bobines plates en forme de galettes comme 301, 302, d'environ 600 mm de diamètre. Les galettes se superposent sur un axe XX vertical au fur et à mesure du remplissage. Il est prévu de stoker 10 à 20 galettes avec un intercalaire entre elles. Le passage d'une galette 301 à la suivante 302 se fait manuellement. La synchronisation avec tirage de la bande se fait par un patin de régulation. La tension est réglée par le contrepoids du patin.
   - un train de tirage 350 permet d'entraîner la bande en continu. Il comporte des rouleaux en élastomère et permet d'exercer une pression fixe par vérin pneumatique. Il est synchronisé électriquement avec les dispositifs de calandrage.

La ligne de formation continue L est pilotée par un poste de commande 400, du type ordinateur avec écran de visualisation. Ce poste 400 est relié par réseau, par exemple, aux différents dispositifs à commandes électriques de la ligne : moteurs électriques, variateurs de vitesse et régulateurs de vitesse, de température, moteur du train de tirage pour permettre les différentes synchronisations nécessaires au fonctionnement en continu de la ligne L. Ce poste de commande permet également d'enregistrer tous les paramètres pour la gestion des automatismes et de synchronisation.

Dans le cas où les fibres de renfort 1 utilisées ont une couche d'enduction (ou d'ensimage), la couche d'enduction pourra être retirée si nécessaire, c'est-à-dire en cas d'incompatibilité avec les fibres à fondre de polymère thermodurcissable selon l'invention. La couche d'enduction sera retirée avant mise en contact des deux séries de fibres 1, 2. A cette fin, il peut être prévu que les fibres des deux séries arrivent par deux dévidoirs séparés, de sorte que le désensimage soit opéré sur les fibres de renfort avant mise en contact des deux séries de fibres ou il peut être prévu que le désensimage des fibres de renfort soit réalisé dans un four, comme le four 105, avant la mise en contact des deux séries de fibres dans le four 105.

En outre, pour obtenir une fusion et imprégnation améliorée, on pourra utiliser un dispositif de chauffage 110 de type laser au lieu d'un four à infra rouge. Dans le cas d'un chauffage au laser, le dispositif laser est agencé de sorte que le rayon laser arrive dans l'axe longitudinal des fibres (du ruban), c'est-à-dire l'axe de tirage. Ainsi, le chauffage est direct et donc concentré sur les fibres.

Préférentiellement, le dispositif de chauffage 110 est de type chauffage par induction ou micro-ondes.

En effet, un dispositif de chauffage par induction ou micro-onde est particulièrement adapté lorsque des fibres conductrices électriquement sont présentes dans l'assemblage ou lorsque des charges conductrices électriques telles que des NTC sont présentes dans le matériau pré-imprégné. Car, dans le cas d'un chauffage par induction ou par micro-ondes, la conductivité électrique de ces dernières est mise en oeuvre et contribue à l'obtention d'une cuisson à coeur et à une meilleure homogénéité du matériau fibreux. La conduction thermique des fibres de l'assemblage ou des charges NTC présentes dans le matériau fibreux pré-imprégné contribue également, avec ce type de chauffage, à une cuisson à coeur améliorant l'homogénéité du matériau.

Le chauffage par micro-onde ou par induction, tout particulièrement bien adapté en présence de charges telles que des nanotubes de carbone NTC dans le matériau pré-imprégné, permet d'obtenir une meilleure dispersion / répartition des NTC au sein du matériau, conduisant à une meilleure homogénéité des propriétés physico-chimiques et, par conséquent, de meilleures propriétés au global sur le produit final.

Les matériaux fibreux pré-imprégnés d'une composition contenant un polymère thermodurcissable ou un mélange de polymères thermodurcissables et un mélange NTC / durcisseur selon l'invention sont particulièrement adaptés pour la fabrication de pièces à trois dimensions.

Pour cela, les matériaux sont mis en forme et chauffés à une température au moins égale à la température de transition vitreuse Tg du polymère thermodurcissable afin d'activer la réaction du durcisseur, c'est-à-dire de réticuler le polymère pour rendre la composition thermodure et donner à la pièce sa forme finale.

De façon pratique, plusieurs méthodes peuvent être utilisées pour la fabrication de pièces à trois dimensions.

Dans un exemple, la mise en forme des matériaux fibreux peut consister à disposer les matériaux fibreux pré-imprégnés sur une préforme, en quinconce et de façon à ce qu'ils se superposent au moins en partie jusqu'à obtention de l'épaisseur voulue et à chauffer au moyen d'un laser qui permet en outre d'ajuster le positionnement des matériaux fibreux par rapport à la préforme, la préforme étant ensuite retirée.

Dans un autre exemple, on utilise la méthode de pultrusion. Le matériau fibreux qui se trouve sous forme de fibres unidirectionnelles ou de bandes de tissus est placé dans un bain de résine(s) thermodurcissable(s) que l'on passe ensuite dans une filière chauffée où s'effectue la mise en forme et la réticulation (le durcissement).

Selon d'autres exemples, la mise en forme des matériaux pré-imprégnés est réalisée par l'une des techniques connues suivantes :
- le calandrage,
- le laminage,
- la technique de pultrusion,
- l'injection basse pression (R.T.M) ou encore,
- la technique de l'enroulement filamentaire,
- l'infusion,
- la thermocompression,
- RIM ou S-RIM.

On peut réaliser ainsi des pièces ayant une structure à 2 et 3 dimensions comme par exemple les ailes d'avion, le fuselage d'un avion, la coque d'un bateau, les longerons ou spoilers d'une automobile ou encore des disques de freins, des vérins ou des volants de direction.

En pratique, le chauffage du matériau fibreux peut être réalisé par un chauffage laser ou une torche à plasma, à azote ou un four à infrarouge ou encore par micro-ondes ou par induction. Avantageusement, le chauffage est réalisé par induction ou par micro-ondes.

En effet, les propriétés de conductivité du matériau pré-imprégné contenant des fibres conductrices et/ou chargé de particules conductrices comme des NTC sont intéressantes en association avec un chauffage par induction ou par micro-ondes car, alors, la conductivité électrique est mise en oeuvre et contribue à l'obtention d'une cuisson à coeur et à une meilleure homogénéité du matériau fibreux. La conduction thermique des charges telles que des NTC présentes dans le matériau fibreux pré-imprégné contribue également avec ce type de chauffage à une cuisson à coeur améliorant l'homogénéité du substrat.

Le chauffage par induction est obtenu, par exemple, par exposition du substrat à un champ électromagnétique alternatif au moyen d'une unité hautes fréquences de 650 KHz à 1 MHz.
Le chauffage par micro-ondes est obtenu, par exemple, par exposition du substrat à un champ électromagnétique hyperfréquence au moyen d'un générateur hyperfréquence de 2 à 3 GHz.

La Tg peut être mesurée par analyse mécanique dynamique par DMA à une fréquence de 1 Hz et avec une montée en température de 2°C par minute et avec un temps de stabilisation de 30 s tous les 2°C avant la mesure. La Tf peut être mesurée par DSC (calorimétrie différentielle à balayage).

### Partie expérimentale

L'exemple 1 est présenté pour l'illustration de la présente invention.

### Exemple 1 : Préparation d'un composite thermodurcissable époxy-amine selon l'invention.

Dans une 1^{ère} étape, on prépare un mélange durcisseur / NTC avec durcisseur polyamine selon le mode opératoire suivant :
Dans la première trémie d'alimentation d'un co-malaxeur BUSS^{®} MDK 46 (L/D = 11), équipé d'une vis d'extrusion et d'un dispositif de granulation, on introduit des nanotubes de carbone Graphistrength^{®} C100 d'ARKEMA. Le durcisseur de type mélange de polyamines (Aradur^{®} 5052 de Hunstman) est injecté sous forme liquide à température ambiante dans la 2ème zone du co-malaxeur. Après malaxage, on obtient à la sortie de l'extrudeuse de reprise un mélange solide en sortie de filière, renfermant 25% de NTC et 75% de durcisseur. Ce mélange est ensuite utilisé comme tel ou après dilution dans le même durcisseur, en fonction du taux de NTC visé, pour la fabrication d'un composite époxy-amine / fibres de verre, par infusion.

Quelques minutes avant l'étape d'infusion, le mélange liquide durcisseur / NTC (1% NTC) est introduit dans la résine thermodurcissable (Araldite LY 5052 de Huntsman) avec un rapport en poids de 38 parts de durcisseur pour 100 parts de résine. Le mélange est effectué au moyen d'un mélangeur à pales à température ambiante et à une vitesse de 100 tours/min pendant quelques secondes.

Le mélange réactif à trois composants (résine thermodurcissable - durcisseur - NTC) est ensuite infusé sous vide dans un réseau tridimensionnel de fibres de verre, constitué d'un empilement de 8 plis (tissus) bi-dimensionnels de fibres de verre. Après durcissement de la résine obtenu après 1 heure à température ambiante, on obtient un composite composé de 50 vol % de fibres de verre et de 50 vol % de résine thermodure chargée en NTC.

## Revendications

1. Procédé de fabrication d'un matériau fibreux comportant un assemblage d'une ou plusieurs fibres, composé de fibres de carbone ou de fibres de verre ou de fibres végétales ou de fibres minérales ou de fibres cellulosiques ou de fibres à base de polymère, utilisées seules ou en mélange, imprégné par un polymère thermodurcissable ou un mélange de polymères thermodurcissables contenant un durcisseur et des nanocharges d'origine carbonique telles que des nanotubes de carbone (NTC), **caractérisé en ce qu'**on utilise un mélange contenant les nanocharges d'origine carbonique et le durcisseur, pour introduire lesdites nanocharges dans le matériau fibreux.

2. Procédé de fabrication d'un matériau fibreux comportant un assemblage d'une ou plusieurs fibres selon la revendication 1, **caractérisé en ce que** le mélange nanocharges / durcisseur se présente sous forme de fluide, de fibres, de poudre ou de film.

3. Procédé de fabrication d'un matériau fibreux comportant un assemblage d'une ou plusieurs fibres selon la revendication 1, **caractérisé en ce que** le mélange nanocharges / durcisseur est introduit directement dans le polymère thermodurcissable ou le mélange de polymères thermodurcissables servant à imprégner le matériau fibreux.

4. Procédé de fabrication d'un matériau fibreux comportant un assemblage d'une ou plusieurs fibres selon la revendication 1, **caractérisé en ce que** le mélange nanocharges / durcisseur est introduit dans le matériau fibreux avant imprégnation, sous forme de fibres incorporées dans l'assemblage de fibres dudit matériau ou sous forme de film déposé sur le matériau ou sous forme de poudre déposée sur ledit matériau.

5. Procédé de fabrication d'un matériau fibreux selon l'une quelconque des revendications précédentes, **caractérisé en ce que** le mélange nanocharges d'origine carbonique / durcisseur comporte avantageusement un taux de nanocharges compris entre 10% et 60%, de préférence entre 20% et 50% par rapport au poids total du mélange.

6. Procédé de fabrication d'un matériau fibreux selon l'une quelconque des revendications précédentes, **caractérisé en ce que** les nanocharges d'origine carbonique sont constituées de nanotubes de carbone ou de nanofibres de carbone ou de noir de carbone ou de graphènes ou de graphite ou un mélange de ceux-ci .

7. Procédé de fabrication d'un matériau fibreux selon l'une quelconque des revendications précédentes, **caractérisé en ce que** le durcisseur est choisi parmi des amines, des dérivés obtenus par réaction de l'urée avec une polyamine, des anhydrides d'acide, des acides organiques, des phosphates organiques, des polyols, amorceurs radicalaires tels que peroxydes ou hydroperoxydes.

8. Procédé de fabrication d'un matériau fibreux selon l'une quelconque des revendications précédentes, **caractérisé en ce que** le mélange nanocharges / durcisseur comporte un ou des additifs tels qu'un accélérateur ou un catalyseur ou encore un polymère thermoplastique ou un mélange de polymères thermoplastiques.

9. Procédé de fabrication d'un matériau fibreux selon la revendication 8, **caractérisé en ce que** le catalyseur est choisi parmi : les acides benzoïques substitués tels que les acides salicylique, 5-chlore-benzoique ou acétylsalicylique, les acides sulfonés tels que l'acide m-benzène-disulfonique et l'accélérateur est choisi parmi : les amines tertiaires telles que diméthylaminoéthyl phénol (DMP), benzyl diméthyl aniline (BDMA), monoéthyl amine associée au trifluorure de bore (MEA-BF3), les imidazoles tels que imidazole-2-éthyl-4-méthyl, les alcoolats métalliques.

10. Procédé de fabrication d'un matériau fibreux selon l'une quelconque des revendications précédentes, **caractérisé en ce que** le polymère thermodurcissable est choisi parmi : les polyesters insaturés, les résines époxy, les esters vinyliques, les monomères ou oligomères acrylates multifonctionnels, les résines acryliques acrylées, les résines phénoliques, les polyuréthanes, les cyanoacrylates et les polyimides, tels que les résines bis-maléimides, les aminoplastes (résultant de la réaction d'une amine telle que la mélamine avec un aldéhyde tel que le glyoxal ou le formaldéhyde) et leurs mélanges.

11. Procédé de fabrication d'un matériau fibreux selon l'une quelconque des revendications précédentes, **caractérisé en ce que** l'imprégnation est réalisée en plaçant le matériau fibreux dans un bain de polymère(s) thermodurcissable(s) fluide, dans lequel on introduit le mélange nanocharges / durcisseur.

12. Procédé de fabrication d'un matériau fibreux selon la revendication 3, **caractérisé en ce que** l'imprégnation est réalisée en plaçant le matériau fibreux en lit fluidisé avec le polymère thermodurcissable ou le mélange polymères thermodurcissables se trouvant à l'état de poudre ainsi que le mélange nanocharges / durcisseur.

13. Procédé de fabrication d'un matériau fibreux selon la revendication 3, **caractérisé en ce que** l'imprégnation est réalisée en extrudant directement un flux de polymère thermodurcissable contenant le mélange nanocharges / durcisseur sur le matériau fibreux qui se présente sous forme de nappe ou bande ou tresse.

14. Procédé de fabrication d'un matériau fibreux selon la revendication 4, **caractérisé en ce que** le mélange nanocharges / durcisseur est introduit directement dans le matériau fibreux, l'imprégnation étant réalisée en plaçant le matériau fibreux en lit fluidisé avec le polymère thermodurcissable ou le mélange polymères thermodurcissables se trouvant à l'état de poudre ou en plaçant le matériau fibreux dans un bain de polymère(s) thermodurcissable(s) fluide ou par dépôt d'un film de polymère thermodurcissable sur le matériau fibreux, suivi de calandrage et de chauffage.

15. Procédé de fabrication d'un matériau fibreux selon l'une quelconque des revendications 1 à 10, **caractérisé en ce qu'**il consiste à i) utiliser au moins deux séries de fibres différentes, une première série de fibres continues formant les fibres de renfort dudit matériau et une deuxième série de fibres de polymère thermodurcissable contenant le mélange nanocharges / durcisseur et ayant une température de fusion Tf ; ii) disposer les deux séries de fibres au contact l'une de l'autre puis iii) chauffer l'ensemble des deux séries de fibres jusqu'à une température au moins égale à la température de fusion Tf des fibres thermodurcissables et en laissant refroidir l'ensemble jusqu'à la température ambiante, la température de fusion Tf étant inférieure à la température de réaction du durcisseur et inférieure à la température de fusion des fibres de la première série.

16. Procédé de fabrication d'un matériau fibreux selon la revendication 15, **caractérisé en ce que** les fibres de renfort constituant la première série sont des fibres minérales ou des fibres organiques de polymère thermoplastique ou thermodurcissable.

17. Utilisation de matériaux fibreux pré-imprégnés obtenus par un procédé selon l'une quelconque des revendications 1 à 16, pour la fabrication de pièces ayant une structure à trois dimensions, **caractérisée en ce qu'**elle comprend une étape de mise en forme des matériaux fibreux pré-imprégnés associée à un chauffage de ces matériaux à une température au moins égale à la température de transition vitreuse Tg du polymère thermodurcissable, afin d'activer la réaction du durcisseur, c'est-à-dire de réticuler le polymère pour rendre la composition thermodure et donner à la pièce sa forme finale.

18. Utilisation de matériaux fibreux pré-imprégnés pour la fabrication de pièces à trois dimensions selon la revendication 17, **caractérisée en ce que** ladite mise en forme des matériaux fibreux consiste à disposer les matériaux fibreux pré-imprégnés sur une préforme, en quinconce et de façon à ce qu'ils se superposent au moins en partie jusqu'à obtention de l'épaisseur voulue et à chauffer au moyen d'un laser qui permet en outre d'ajuster le positionnement des matériaux fibreux par rapport à la préforme, la préforme étant ensuite retirée.

19. Utilisation de matériaux fibreux pré-imprégnés pour la fabrication de pièces à trois dimensions selon la revendication 17, **caractérisé en ce que** la mise en forme des matériaux pré-imprégné est réalisée par l'une des techniques connues suivantes :
- le calandrage,
- le laminage,
- la technique de pultrusion,
- l'injection basse pression (R.T.M) ou encore,
- la technique de l'enroulement filamentaire,
- l'infusion,
- la thermocompression,
- le RIM ou S-RIM.

## Patentansprüche

1. Verfahren zur Herstellung eines Faserstoffs, der eine Anordnung einer oder mehrerer Fasern aufweist, der aus Kohlenstofffasern oder aus Glasfasern oder aus Pflanzenfasern oder aus Mineralfasern oder aus Cellulosefasern oder aus Fasern auf Polymerbasis besteht, die allein oder in Mischung verwendet werden, imprägniert durch ein wärmehärtendes Polymer oder eine Mischung wärmehärtender Polymere, die einen Härter und Nanofüllstoffe mit Kohlenstoffursprung, wie beispielsweise Kohlenstoff-Nanoröhren (NTC), enthalten, **dadurch gekennzeichnet, dass** eine Mischung verwendet wird, die die Nanofüllstoffe mit Kohlenstoffursprung und den Härter enthält, um die Nanofüllstoffe in den Faserstoff einzubringen.

2. Verfahren zur Herstellung eines Faserstoffs, der eine Anordnung einer oder mehrerer Fasern nach Anspruch 1 aufweist, **dadurch gekennzeichnet, dass** die Mischung Nanofüllstoffe/Härter in Form eines Fluids, von Fasern, eines Pulvers oder eines Films vorliegt.

3. Verfahren zur Herstellung eines Faserstoffs, der eine Anordnung einer oder mehrerer Fasern nach Anspruch 1 aufweist, **dadurch gekennzeichnet, dass** die Mischung Nanofüllstoffe/Härter direkt in das wärmehärtende Polymer oder die Mischung wärmehärtender Polymere, die zur Imprägnierung des Faserstoffs dienen, eingebracht wird.

4. Verfahren zur Herstellung eines Faserstoffs, der eine Anordnung einer oder mehrerer Fasern nach Anspruch 1 aufweist, **dadurch gekennzeichnet, dass** die Mischung Nanofüllstoffe/Härter vor der Imprägnierung in Form von Fasern, die in der Faseranordnung des Materials eingefügt sind, oder in Form eines Films, der auf dem Material abgelagert ist, oder in Form von Pulver, das auf dem Material abgelagert ist, in den Faserstoff eingebracht wird.

5. Verfahren zur Herstellung eines Faserstoffs nach einem der vorhergehenden Ansprüche, **dadurch gekennzeichnet, dass** die Mischung Nanofüllstoffe mit Kohlenstoffursprung / Härter vorteilhafterweise einen Anteil an Nanofüllstoffen zwischen 10 % und 60 %, vorzugsweise zwischen 20 % und 50 % im Verhältnis zu dem Gesamtgewicht der Mischung aufweist.

6. Verfahren zur Herstellung eines Faserstoffs nach einem der vorhergehenden Ansprüche, **dadurch gekennzeichnet, dass** die Nanofüllstoffe mit Kohlenstoffursprung aus Kohlenstoff-Nanoröhren oder aus Kohlenstoffnanofasern oder aus Ruß oder aus Graphenen oder aus Graphit oder aus einer Mischung davon bestehen.

7. Verfahren zur Herstellung eines Faserstoffs nach einem der vorhergehenden Ansprüche, **dadurch gekennzeichnet, dass** der Härter aus Derivaten, die durch Reaktion von Harnstoff mit einem Polyamin erhalten werden, Säureanhydriden, organischen Säuren, organischen Phosphaten, Polyolen, Radikalinitiatoren, wie beispielsweise Peroxide oder Hydroperoxide, ausgewählt wird.

8. Verfahren zur Herstellung eines Faserstoffs nach einem der vorhergehenden Ansprüche, **dadurch gekennzeichnet, dass** die Mischung Nanofüllstoffe/Härter einen oder mehrere Zusätze aufweist, wie beispielsweise einen Beschleuniger oder einen Katalysator oder aber ein thermoplastisches Polymer oder eine Mischung thermoplastischer Polymere.

9. Verfahren zur Herstellung eines Faserstoffs nach Anspruch 8, **dadurch gekennzeichnet, dass** der Katalysator ausgewählt wird aus: substituierten Benzoesäuren, wie zum Beispiel Salicyl-, 5-Chlor-Benzoe- oder Acetylsalicylsäuren, Sulfonsäuren, wie zum Beispiel m-Benzendisulfonsäure, und der Beschleuniger ausgewählt wird aus: tertiären Aminen, wie zum Beispiel Dimethylaminoethylphenol (DMP), Benzyldimethylanilin (BDMA), Monoethylamin verbunden mit Bortrifluorid (MEA-BF3), Imidazolen, wie zum Beispiel Imidazol-2-Ethyl-4-Methyl, Metallalkoxide.

10. Verfahren zur Herstellung eines Faserstoffs nach einem der vorhergehenden Ansprüche, **dadurch gekennzeichnet, dass** das wärmehärtende Polymer ausgewählt wird aus: ungesättigten Polyestern, Epoxidharzen, Vinylestern, multifunktionalen Acrylatmonomeren oder -oligomeren, acrylierten Acrylharzen, Phenolharzen, Polyurethanen, Cyanoacrylaten und Polyimiden, wie zum Beispiel Bismaleimidharzen, Aminoplasten (die aus der Reaktion eines Amins, wie beispielsweise Melamin, mit einem Aldehyd, wie beispielsweise Glyoxal oder Formaldehyd, entstehen) und deren Mischungen.

11. Verfahren zur Herstellung eines Faserstoffs nach einem der vorhergehenden Ansprüche, **dadurch gekennzeichnet, dass** die Imprägnierung erfolgt, indem der Faserstoff in ein Bad aus flüssigem(n) wärmehärtendem(n) Polymer(en), in das die Mischung Nanofüllstoffe/Härter eingebracht wird, gebracht wird.

12. Verfahren zur Herstellung eines Faserstoffs nach Anspruch 3, **dadurch gekennzeichnet, dass** die Imprägnierung erfolgt, indem der Faserstoff in ein Wirbelbett mit dem wärmehärtendem Polymer und mit der Mischung aus wärmehärtenden Polymeren, die pulverförmig sind, wie der Mischung Nanofüllstoffe/Härter, gelegt wird.

13. Verfahren zur Herstellung eines Faserstoffs nach Anspruch 3, **dadurch gekennzeichnet, dass** die Imprägnierung erfolgt, indem ein Strom aus wärmehärtendem Polymer, das die Mischung Nanofüllstoffe/Härter enthält, auf dem Faserstoff, das in Form einer Bahn, eines Bandes oder eines Stranges vorliegt, direkt extrudiert wird.

14. Verfahren zur Herstellung eines Faserstoffs nach Anspruch 4, **dadurch gekennzeichnet, dass** die Mischung Nanofüllstoffe / Härter direkt in den Faserstoff eingebracht wird, wobei die Imprägnierung erfolgt, indem der Faserstoff in ein Wirbelbett mit dem wärmehärtendem Polymer oder der Mischung aus wärmehärtenden Polymeren, die pulverförmig sind, gelegt wird oder In dem der Faserstoff in ein Bad aus flüssigem(n) wärmehärtendem(n) Polymer(en) durch Ablagerung eines Films aus wärmehärtendem Polymer auf dem Faserstoff, gefolgt von einer galant Regierung und einer Erwärmung, gelegt wird.

15. Verfahren zur Herstellung eines Faserstoffs nach einem der Ansprüche 1 bis 10, **dadurch gekennzeichnet, dass** es darin besteht, i) mindestens zwei Reihen unterschiedlicher Fasern zu verwenden, wobei eine erste Reihe kontinuierlicher Fasern die Verstärkungsfasern des Materials bilden und eine zweite Reihe von Fasern aus wärmehärtendem Polymer die Mischung Nanofüllstoffe / Härter enthält und eine Schmelztemperatur Tf aufweist; ii) die beiden Reihen von Fasern miteinander in Kontakt anzuordnen, dann iii) die Gesamtheit der beiden Faserreihen auf eine Temperatur zu erhitzen, die mindestens gleich der Schmelztemperatur Tf der wärmehärtenden Fasern ist, und das Ganze auf eine Umgebungstemperatur abkühlen zu lassen, wobei die Schmelztemperatur Tf niedriger ist als die Reaktionstemperatur des Härters und niedriger als die Schmelztemperatur der Fasern der ersten Reihe ist.

16. Verfahren zur Herstellung eines Faserstoffs nach Anspruch 15, **dadurch gekennzeichnet, dass** die Verstärkungsfasern, die die erste Reihe bilden, Mineralfasern oder organische Fasern aus thermoplastischem oder wärmehärtendem Polymer sind.

17. Verwendung von vorimprägnierten Faserstoffen, die durch ein Verfahren nach einem der Ansprüche 1 bis 16 erhalten werden, zur Herstellung von Teilen, die eine dreidimensionale Struktur aufweisen, **dadurch gekennzeichnet, dass** sie einen Schritt der Formgebung der vorimprägnierten Faserstoffe aufweist, der mit einer Erwärmung dieser Stoffe bei einer Temperatur, die mindestens gleich der Glasübergangstemperatur Tg des wärmehärtenden Polymers ist, verknüpft ist, um die Reaktion des Härters zu aktivieren, das heißt, das Polymer zu vernetzen, um die Zusammensetzung wärmehärtend zu machen und dem Teil seine endgültige Form zu geben.

18. Verwendung von vorimprägnierten Faserstoffen zur Herstellung von dreidimensionalen Teilen nach Anspruch 17, **dadurch gekennzeichnet, dass** die Formgebung der Faserstoffe darin besteht, die vorimprägnierten Faserstoffe versetzt auf einem Vorformling anzuordnen, sodass sie sich zumindest teilweise bis zum Erhalt der gewünschten Stärke überlagern, und mithilfe eines Lasers, der es außerdem ermöglicht, die Anordnung der Faserstoffe in Bezug auf den Vorformling einzustellen, zu erwärmen, wobei der Vorformling danach entnommen wird.

19. Verwendung von vorimprägnierten Faserstoffen zur Herstellung von dreidimensionalen Teilen nach Anspruch 17, **dadurch gekennzeichnet, dass** die Formgebung der vorimprägnierten Stoffe durch eine der folgenden bekannten Techniken erfolgt:
- Kalandrierung,
- Laminierung,
- Pultrusionstechnik,
- Niederdruckinjektion (R.T.M.) oder aber
- Filamentwickeltechnik,
- Infusion,
- Thermokompression,
- RIM oder S-RIM.

## Claims

1. A process for manufacturing a fibrous material comprising an assembly of one or more fibers, composed of carbon fibers or glass fibers or plant fibers or mineral fibers or cellulose fibers or polymer-based fibers, used alone or as a mixture, impregnated by a thermosetting polymer or a blend of thermosetting polymers containing a curing agent and nanofillers of carbon origin such as carbon nanotubes (CNTs), **characterized in that** a mixture containing the nanofillers of carbon origin and the curing agent is used in order to introduce said nanofillers into the fibrous material.

2. The process for manufacturing a fibrous material comprising an assembly of one or more fibers as claimed in claim 1, **characterized in that** the nanofillers/curing agent mixture is in the form of fluid, fibers, powder or film.

3. The process for manufacturing a fibrous material comprising an assembly of one or more fibers as claimed in claim 1, **characterized in that** the nanofillers/curing agent mixture is introduced directly into the thermosetting polymer or the blend of thermosetting polymers used to impregnate the fibrous material.

4. The process for manufacturing a fibrous material comprising an assembly of one or more fibers as claimed in claim 1, **characterized in that** the nanofillers/curing agent mixture is introduced into the fibrous material before impregnation, in the form of fibers incorporated into the assembly of fibers of said material or in the form of a film deposited on the material or in the form of powder deposited on said material.

5. The process for manufacturing a fibrous material as claimed in any one of the preceding claims, **characterized in that** the nanofillers of carbon origin/curing agent mixture advantageously comprises a content of nanofillers of between 10% and 60%, preferably between 20% and 50%, relative to the total weight of the mixture.

6. The process for manufacturing a fibrous material as claimed in any one of the preceding claims, **characterized in that** the nanofillers of carbon origin consist of carbon nanotubes or carbon nanofibers or carbon black or graphenes or graphite or a mixture thereof.

7. The process for manufacturing a fibrous material as claimed in any one of the preceding claims, **characterized in that** the curing agent is selected from amines, derivatives obtained by reaction of urea with a polyamine, acid anhydrides, organic acids, organic phosphates, polyols, and radical initiators such as peroxides or hydroperoxides.

8. The process for manufacturing a fibrous material as claimed in any one of the preceding claims, **characterized in that** the nanofillers/curing agent mixture comprises one or more additives such as an accelerator or a catalyst or else a thermoplastic polymer or a blend of thermoplastic polymers.

9. The process for manufacturing a fibrous material as claimed in claim 8, **characterized in that** the catalyst is selected from: substituted benzoic acids such as salicylic acid, 5-chlorobenzoic acid or acetylsalicylic acid, sulfone-containing acids such as m-benzenedisulfonic acid and the accelerator is selected from: tertiary amines such as dimethylaminoethylphenol (DMP), benzyldimethyl aniline (BDMA), monoethylamine associated with boron trifluoride (MEA-BF3), imidazoles such as 2-ethyl-4-methylimidazole, and metal alcoholates.

10. The process for manufacturing a fibrous material as claimed in any one of the preceding claims, **characterized in that** the thermosetting polymer is selected from: unsaturated polyesters, epoxy resins, vinyl esters, multifunctional acrylate monomers or oligomers, acrylic/acrylate resins, phenolic resins, polyurethanes, cyanoacrylates and polyimides, such as bismaleimide resins, aminoplasts (resulting from the reaction of an amine such as melamine with an aldehyde such as glyoxal or formaldehyde) and mixtures thereof.

11. The process for manufacturing a fibrous material as claimed in any one of the preceding claims, **characterized in that** the impregnation is carried out by placing the fibrous material in a fluid bath of thermosetting polymer(s), into which the nanofillers/curing agent mixture is introduced.

12. The process for manufacturing a fibrous material as claimed in claim 3, **characterized in that** the impregnation is carried out by placing the fibrous material in a fluidized bed with the thermosetting polymer or the blend of thermosetting polymers that is in powder form and also the nanofillers/curing agent mixture.

13. The process for manufacturing a fibrous material as claimed in claim 3, **characterized in that** the impregnation is carried out by directly extruding a stream of thermosetting polymer containing the nanofillers/curing agent mixture over the fibrous material which is in the form of a sheet or strip or braid.

14. The process for manufacturing a fibrous material as claimed in claim 4, **characterized in that** the nanofillers/curing agent mixture is introduced directly into the fibrous material, the impregnation being carried out by placing the fibrous material in a fluidized bed with the thermosetting polymer or the blend of thermosetting polymers in powder form or by placing the fibrous material in a fluid bath of thermosetting polymer(s) or by depositing a film of thermosetting polymer on the fibrous material, followed by calendering and heating.

15. The process for manufacturing a fibrous material as claimed in any one of claims 1 to 10, **characterized in that** it consists in i) using at least two series of different fibers, a first series of continuous fibers forming the reinforcing fibers of said material and a second series of thermosetting polymer fibers containing the nanofillers/curing agent mixture and having a melting temperature Tm; ii) placing the two series of fibers in contact with one another, then iii) heating the set of the two series of fibers to a temperature at least equal to the melting temperature Tm of the thermosetting fibers and leaving the set to cool to ambient temperature, the melting temperature Tm being below the reaction temperature of the curing agent and below the melting temperature of the fibers of the first series.

16. The process for manufacturing a fibrous material as claimed in claim 15, **characterized in that** the reinforcing fibers constituting the first series are mineral fibers or organic fibers of thermoplastic or thermosetting polymer.

17. The use of pre-impregnated fibrous materials obtained by a process as claimed in any one of claims 1 to 16, for the manufacture of parts having a three-dimensional structure, **characterized in that** it comprises a step of shaping the pre-impregnated fibrous materials combined with a heating of these materials to a temperature at least equal to the glass transition temperature Tg of the thermosetting polymer, in order to activate the reaction of the curing agent, that is to say to crosslink the polymer in order to render the composition thermoset and give the part its final shape.

18. The use of pre-impregnated fibrous materials for the manufacture of three-dimensional parts as claimed in claim 17, **characterized in that** said shaping of the fibrous materials consists in positioning the pre-impregnated fibrous materials on a preform, in staggered rows and so that they are at least partly superposed until the desired thickness is obtained and in heating by means of a laser which also makes it possible to adjust the positioning of the fibrous materials relative to the preform, the preform then being removed.

19. The use of pre-impregnated fibrous materials for the manufacture of three-dimensional parts as claimed in claim 17, **characterized in that** the shaping of the pre-impregnated materials is carried out by one of the following known techniques:
- calendering,
- laminating,
- the pultrusion technique,
- low-pressure injection molding (RTM) or else,
- the technique of filament winding,
- infusion,
- thermocompression,
- RIM or S-RIM.
